(19) Europäisches Patentamt European Patent Office Office européen des brevets

(11) **EP 4 751 782 A1**

(12) **EUROPEAN PATENT APPLICATION**
published in accordance with Art. 153(4) EPC

(43) Date of publication:
03.06.2026 Bulletin 2026/23

(51) International Patent Classification (IPC):
*A62C 2/00* (2006.01)  *A62C 3/16* (2006.01)
*A62C 19/00* (2006.01)  *A62D 1/06* (2006.01)

(21) Application number: 24845631.1

(52) Cooperative Patent Classification (CPC):
A62C 2/00; A62C 3/16; A62C 19/00; A62D 1/06

(22) Date of filing: 23.07.2024

(86) International application number:
PCT/JP2024/026360

(87) International publication number:
WO 2025/023256 (30.01.2025 Gazette 2025/05)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 26.07.2023 JP 2023121981
27.10.2023 JP 2023184516

(71) Applicant: Toppan Holdings Inc.
Tokyo 110-0016 (JP)

(72) Inventors:
• ISOWA Manami
Tokyo 110-0016 (JP)
• KUROKAWA Masato
Tokyo 110-0016 (JP)
• KAKEGAWA Shunta
Tokyo 110-0016 (JP)
• SHIINE Yasuharu
Tokyo 110-0016 (JP)
• HONJO Yusaku
Tokyo 110-0016 (JP)

(74) Representative: Hoffmann Eitle
Patent- und Rechtsanwälte PartmbB
Arabellastraße 30
81925 München (DE)

(54) **FIRE EXTINGUISHING MATERIAL, AND DEVICE HAVING FIRE EXTINGUISHING FUNCTION**

(57) A fire extinguishing material including a sheet containing a fire extinguishing agent layer and a packaging material housing the sheet, in which the fire extinguishing agent layer includes a binder resin and a fire extinguishing agent that contains at least one of a deliquescent organic salt and a deliquescent inorganic salt, the packaging material has a laminate structure containing an aluminum foil and an insulating layer, the aluminum foil is disposed between the sheet and the insulating layer, and the insulating layer has a melting temperature of 150°C to 500°C.

FIG.2

EP 4 751 782 A1

**Description**

[Technical Field]

The present disclosure relates to a fire extinguishing material and a device having a fire extinguishing function.

[Background Art]

PTL 1 discloses a fire extinguishing body obtained by mixing a binder and a fire extinguishing agent composition that generates an aerosol upon combustion, and molding the mixture into a sheet shape. PTL 2 discloses a fire extinguishing film that can be easily installed in a site having a risk of fire and exerts an excellent effect in initial fire extinguishing when fire occurs. The fire extinguishing film 40 shown in Fig. 6 of PTL 2 includes a fire extinguishing agent-containing layer 1 and surface layers 6a and 6b arranged to sandwich the fire extinguishing agent-containing layer 1. Paragraph [0040] of PTL 2 discloses that a resin substrate, for example, can be used as the surface layers 6a and 6b.

[Citation List]

[Patent Literatures]

> PTL 1: WO 2018/047762
> PTL 2: JP 2021-137345 A

[Summary of the Invention]

[Technical Problem]

When a fire extinguishing material containing a fire extinguishing agent layer is disposed under a high-temperature, high-humidity environment, the performance of the fire extinguishing agent may deteriorate due to intrusion of moisture. Therefore, it is conceivable to suppress the performance deterioration of the fire extinguishing agent by sandwiching and protecting the fire extinguishing agent layer between the pair of resin substrates as shown in Fig. 6 of PTL 2. According to study by the present inventors, a fire extinguishing film having such a configuration still has room for improvement regarding an effect to suppress the performance deterioration of the fire extinguishing agent due to intrusion of moisture.

The present inventors studied protecting a fire extinguishing agent layer with a packaging material using an aluminum foil as a gas barrier layer in order to prevent the performance deterioration of the fire extinguishing agent. Then, there was concern about a new problem in that when a fire extinguishing target having a risk of fire is an electrical device or the like, the fire extinguishing material may cause a short circuit of an electrical circuit. Although it is considered that the possibility of the occurrence of such a short circuit is extremely low, a short circuit can cause the failure of fire in a device. Therefore, the present inventors further studied a measure for solving the above-described problem.

The present disclosure has been made in view of the above-described circumstances and provides a fire extinguishing material that uses an aluminum foil having excellent gas barrier performance in a part of a packaging material and that can solve a problem attributable to the electrical conductivity of the aluminum foil. The present disclosure provides a device having a fire extinguishing function including the fire extinguishing material.

[Solution to Problem]

> [1] A fire extinguishing material including:
>
>> a sheet containing a fire extinguishing agent layer; and
>> a packaging material housing the sheet, in which
>> the fire extinguishing agent layer includes a binder resin and a fire extinguishing agent that contains at least one of a deliquescent organic salt and a deliquescent inorganic salt,
>> the packaging material has a laminate structure containing an aluminum foil and an insulating layer,
>> the aluminum foil is disposed between the sheet and the insulating layer, and

the insulating layer has a melting temperature of 150°C to 500°C.

[2] The fire extinguishing material according to [1], in which the insulating layer has a volume resistivity of $10^{15}\,\Omega\cdot$cm or more.

[3] The fire extinguishing material according to [1] or [2], in which the insulating layer has a thermal conductivity of 0.1 W/(m·K) or more.

[4] The fire extinguishing material according to any of [1] to [3], in which the insulating layer contains at least one resin of a polyethylene terephthalate resin, a nylon resin, a polyvinyl chloride resin, and a polypropylene resin.

[5] The fire extinguishing material according to any of [1] to [4], in which the sheet further includes a substrate.

[6] The fire extinguishing material according to any of [1] to [5], in which the aluminum foil has a thickness of 15 $\mu$m or less.

[7] The fire extinguishing material according to any of [1] to [6], in which the aluminum foil has a thickness of 3 $\mu$m or more.

[8] The fire extinguishing material according to any of [1] to [7], in which the aluminum foil has a puncture strength of 10 N or less.

[9] The fire extinguishing material according to any of [1] to [8], in which the aluminum foil has a tensile fracture strength of 25 N or less.

[10] The fire extinguishing material according to any of [1] to [9], further including a sealant layer between the sheet and the aluminum foil.

[11] The fire extinguishing material according to [10], in which a peripheral edge portion is constituted by a sealing portion formed with the sealant layer.

[12] A device having a fire extinguishing function including:

at least one fire extinguishing target having a risk of fire selected from the group consisting of an electrical device, a switchboard, a distribution board, and a battery; and
the fire extinguishing material according to any of [1] to [11].

[Advantageous Effects of the Invention]

According to the present disclosure, there is provided a fire extinguishing material that uses an aluminum foil having excellent gas barrier performance in a part of a packaging material and that can solve a problem attributable to the electrical conductivity of the aluminum foil. Further, according to the present disclosure, there is provided a device having a fire extinguishing function including the fire extinguishing material.

[Brief Description of the Drawings]

Fig. 1 is a plan view schematically showing a fire extinguishing material according to an embodiment of the present disclosure.

Fig. 2 is a schematic cross-sectional view taken along line II-II of the fire extinguishing material shown in Fig. 1.

Fig. 3 is a perspective view schematically showing an embodiment of a device having a fire extinguishing function according to the present disclosure.

Fig. 4 is a schematic cross-sectional view of a fire extinguishing material according to another embodiment.

Fig. 5 is a schematic cross-sectional view of a fire extinguishing material according to another embodiment.

Fig. 6 is a schematic cross-sectional view of a fire extinguishing material according to another embodiment.

Fig. 7 is a schematic cross-sectional view of a fire extinguishing material according to another embodiment.

Fig. 8(a) and Fig. 8(b) are cross-sectional views schematically showing a process of producing the fire extinguishing material shown in Fig. 7.

[Description of the Embodiments]

Hereinafter, the embodiments of the present disclosure will be described in detail with reference to the drawing as appropriate. However, the present invention is not limited to the following embodiments.

<Fire extinguishing material>

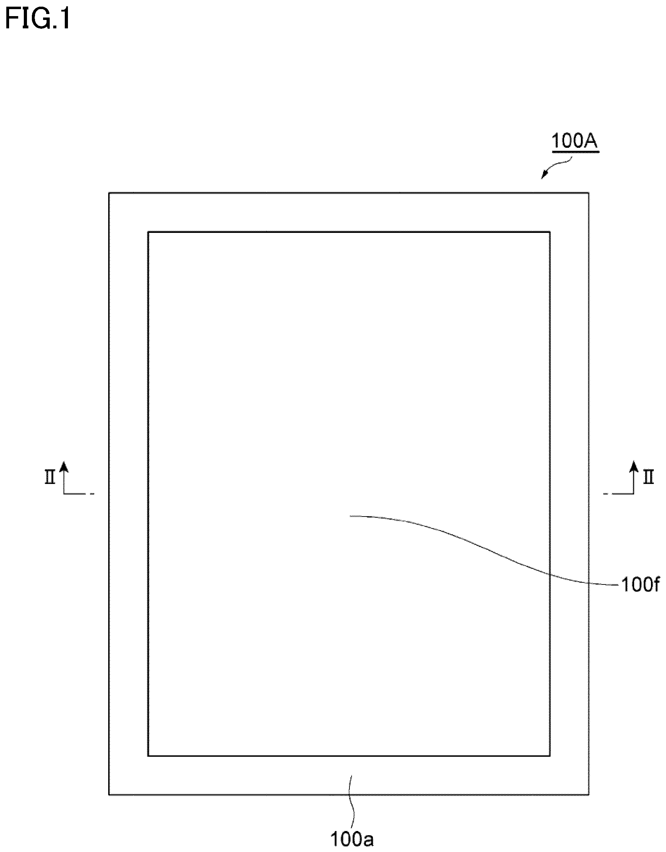

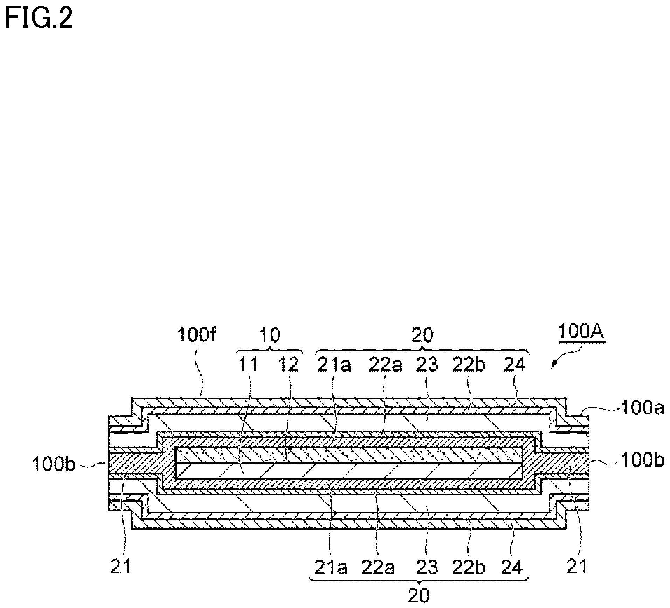

Fig. 1 is a plan view schematically showing a fire extinguishing material according to the present embodiment, and Fig. 2 is a schematic cross-sectional view taken along line II-II of a fire extinguishing material 100A shown in Fig. 1. As shown in Fig. 1, the fire extinguishing material 100A includes a main surface 100f and a peripheral edge portion 100a. As shown in Fig. 2, the fire extinguishing material 100A includes a sheet 10 and a packaging material 20 housing the sheet 10. The sheet 10 has a laminate structure containing a substrate 11 and a fire extinguishing agent layer 12. The packaging material 20 has a laminate structure containing a sealant layer 21a, an adhesive agent layer 22a, an aluminum foil 23, an adhesive agent layer 22b, and an insulating layer 24 in this order. The insulating layer 24 has a melting temperature of 150 to 500°C. The peripheral edge portion 100a of the fire extinguishing material 100A is constituted by a sealing portion 21 formed with the sealant layers 21a of a pair of the packaging materials 20 (see Fig. 2).
According to the fire extinguishing material 100A, it is possible to suppress the performance deterioration of a fire extinguishing agent contained in the fire extinguishing agent layer 12 and suppress a short circuit from occurring in a fire extinguishing target. The present inventors infer that the reason for such effects to be exerted is as follows. That is, in the fire extinguishing material 100A, the sheet 10 is housed in the packaging material 20 containing the aluminum foil 23. This suppresses the deliquescence of the fire extinguishing material due to moisture derived from an external environment so that the performance deterioration of the fire extinguishing material 100A is suppressed. Further, in general, when a packaging material contains an aluminum foil, a short circuit between a fire extinguishing material and a fire extinguishing target may occur. In the fire extinguishing material 100A, the packaging material 20 contains the insulating layer 24, and the insulating layer 24 has a melting temperature of 150 to 500°C. When the melting temperature of the insulating layer 24 is 150°C or higher, it is possible to suppress the melting of the insulating layer and the exposure of the aluminum foil 23 on the outermost surface of the fire extinguishing material 100A, even when a thermal runaway of a fire extinguishing target occurs without leading to fire. This can sufficiently suppress the occurrence of a short circuit. Further, when the melting temperature of the insulating layer 24 is 500°C or lower, the insulating layer 24 is unlikely to inhibit the ejection of an aerosol-like fire extinguishing agent when fire occurs. As a result, the fire extinguishing material 100A can suppress the performance deterioration of the fire extinguishing agent and also suppress a short circuit from occurring in the fire extinguishing target and has excellent fire extinguishing performance. Hereinafter, the constituents of the fire extinguishing material 100A will be described.

(Substrate)

The sheet 10 contains the substrate 11. This further improves the stability of the fire extinguishing agent and tends to improve the rigidity of the fire extinguishing material 100A. In view of the temperature of a flame being generally about 700°C to 900°C, the substrate 11 is preferably a resin substrate. Examples of the material of the substrate 1 11 include a polyolefin resin (LLDPE, PP, COP, CPP, etc.), a polyester resin (PET, etc.), a fluorine resin (PTFE, ETFE, EFEP, PFA, FEP, PCTFE, etc.), a PVC resin, a PVA resin, an acrylic resin, an epoxy resin, a polyamide resin, and a polyimide resin. On these resins, a hole can be made with heat. The substrate 11 may contain a fire extinguishing agent. From the viewpoint of adjusting water vapor permeability, a vapor deposited layer (an alumina vapor deposited layer and/or a silica vapor deposited layer) having water vapor barrier performance may be disposed to the substrate 11.
The thickness of the substrate 11 can be appropriately selected depending on the amount of heat when fire occurs, impact, an allowable space, and the like. The thickness of the substrate 11 may be 5 $\mu$m or more, and preferably 10 $\mu$m or more. Further, the thickness of the substrate 11 may be 100 $\mu$m or less, and preferably 30 $\mu$m or less.

(Fire extinguishing agent layer)

The fire extinguishing agent layer 12 is obtained by molding a composition containing a fire extinguishing agent and a binder resin. The use of a binder resin facilitates retention of the properties of the fire extinguishing agent and can reduce the replacement frequency of the fire extinguishing material. The composition may further contain a liquid medium in addition to the fire extinguishing agent and the binder resin.
The fire extinguishing agent contains at least one of a deliquescent organic salt and a deliquescent inorganic salt. As the organic salt and the inorganic salt, one kind may be used singly, or two or more kinds may be used in combination.
Examples of the organic salt include a potassium salt, a sodium salt, and an ammonium salt. As the organic salt, a potassium salt can be used. Examples of the organic potassium salt include carboxylic acid potassium salts such as potassium acetate, potassium citrate (monopotassium citrate, dipotassium citrate, and tripotassium citrate), potassium tartrate, potassium lactate, potassium oxalate, and potassium maleate.

Examples of the inorganic salt include a potassium salt and a sodium salt. As the inorganic salt, a potassium salt can be used. Examples of the inorganic potassium salt include potassium carbonate, potassium hydrogen carbonate, potassium dihydrogen phosphate, and dipotassium hydrogen phosphate.

As the organic salt and the inorganic salt, tripotassium citrate is preferable. Tripotassium citrate has a high fire extinguishing performance, but has high deliquescence, and so performance deterioration can occur. However, the fire extinguishing material 100A contains the aluminum foil 23. Therefore, the use of tripotassium citrate causes the fire extinguishing material 100A to tend to have even more excellent fire extinguishing performance while suppressing performance deterioration of the fire extinguishing agent.

The fire extinguishing agent may contain a compound having an oxidation effect. Examples of the compound having an oxidation effect include chlorate salts such as potassium chlorate, sodium chlorate, strontium chlorate, ammonium chlorate, and magnesium chlorate. These can generate an aerosol from the respective potassium salts in response to receiving the thermal energy from fire.

As the binder resin, a thermoplastic resin and a thermosetting resin can be used. Examples of the thermoplastic resin include polyolefin-based resins such as a polypropylene-based resin, a polyethylene-based resin, a poly(1-)butene-based resin, and a polypentene-based resin, a polystyrene-based resin, an acrylonitrile-butadiene-styrene-based resin, a methyl methacrylate-butadiene-styrene resin, an ethylene-vinyl acetate resin, an ethylene-propylene resin, a polycarbonate-based resin, a polyphenylene ether-based resin, an acrylic-based resin, a polyamide-based resin, a polyvinyl chloride-based resin, a polyvinyl alcohol (PVA) resin, and a polyvinyl butyral (PVB) resin. Examples of the thermosetting resin include rubbers such as natural rubber (NR), isoprene rubber (IR), butadiene rubber (BR), 1,2-polybutadiene rubber (1,2-BR), styrenebutadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polyvulcanized rubber (T), silicone rubber (Q), fluororubber (FKM, FZ), and urethane rubber (U), a polyurethane resin, a phenol resin, an epoxy resin, and a polyvinyl ether (PMVE)-maleic anhydride resin. The binder resin may contain a hardener component.

The fire extinguishing agent layer 12 may contain a colorant, an antioxidant, a flame retardant, an inorganic filler, and the like, and may contain additives such as a surfactant, a silane coupling agent, and an antiblocking agent from the viewpoint of property stability. These components can be appropriately selected depending on the chemical composition of the fire extinguishing agent layer 12 and the type of the binder resin.

The content (with respect to the total mass of the fire extinguishing agent layer 12) of the fire extinguishing agent in the fire extinguishing agent layer 12 can be 70 to 97 mass%, preferably 80 to 95 mass%, and more preferably 85 to 92 mass%. When the content of the fire extinguishing agent is 70 mass% or more, excellent fire extinguishing performance is easily achieved. On the other hand, when it is 97 mass% or less, excellent moldability is easily achieved.

The thickness of the fire extinguishing agent layer 12 may be appropriately set depending on the amount of the fire extinguishing agent to be blended. The thickness of the fire extinguishing agent layer 12 can be, for example, 1mm or less, may be 30 to 1000 $\mu$m, preferably 100 to 500 $\mu$m, and more preferably 150 to 500 $\mu$m.

An example of the liquid medium is an organic solvent. An example of the organic solvent is a water-soluble solvent. Examples thereof include alcohols such as methanol, ethanol, isopropyl alcohol, and n-propylalcohol; ketones such as acetone and methyl ethyl ketone; glycols such as ethylene glycol and diethylene glycol; and glycol ethers such as N-methylpyrrolidone (NMP), tetrahydrofuran, and butylcellosolve. From the viewpoint of the fire extinguishing agent having deliquescent, the liquid medium may be an alcohol-based solvent, and specifically may be isopropyl alcohol.

The amount of the liquid medium in the composition used for forming the fire extinguishing agent layer only has to be appropriately adjusted depending on the use method of the composition, and can be 40 to 95 mass% with respect to the total amount of the composition. Note that when the composition contains a sufficient amount of the liquid medium, this composition can also be called a coating liquid.

(Sealant layer)

The sealant layer 21a is intended to seal the sheet 10. The sealant layer 21a is constituted by, for example, a resin material having a heat-melting property (i.e., thermal fusibility). An example of the resin material having a heat-melting property is a polyolefin-based resin. That is, the sealant layer 21a may contain a polyolefin-based resin. Examples of the polyolefin-based resin include polyolefin-based resins such as a low-density polyethylene resin (LDPE), a linear low-density polyethylene resin (LLDPE), a medium-density polyethylene resin (MDPE), and a cast polypropylene resin (CPP), polyethylene-based resins such as an ethylene-vinyl acetate copolymer and an ethylene-α-olefin copolymer, and polypropylene-based resins such as a polypropylene-ethylene random copolymer, a polypropylene-ethylene block copolymer, and a polypropylene-α-olefin copolymer. Among these, a low-density polyethylene resin (LDPE), a linear low-density polyethylene resin (LLDPE), or a cast polypropylene resin (CPP) may be contained in the polyolefin-based resin, from the viewpoint of an excellent heat-sealing property and low water vapor permeability which easily suppresses the deterioration of the fire extinguishing agent.

The sealant layer 21a is preferably constituted by, for example, a resin material having a melting temperature of 70°C or higher. As shown in Fig. 2, an edge surface 100b of the fire extinguishing material 100A is not covered with the aluminum foil 23, and the sealant layer 21a is exposed. When the sealant layer 21a constituting the peripheral edge portion 100a melts or tears prior to the aluminum foil 23 in the main surface 100f breaking, the fire extinguishing agent may leak laterally from the edge surface 100b. The fire extinguishing material in which the aluminum foil 23 in the main surface 100f is likely to rupture earlier has an advantage that it can achieve fire extinguishing in the early stages with higher probability than the fire extinguishing material in which the peripheral edge portion 100a is likely to tear earlier. Therefore, the melting temperature of a resin constituting the sealant layer 21a is preferably as high as possible, more preferably 75°C or higher, and further preferably 95°C or higher.

(Adhesive agent layer)

Examples of an adhesive agent constituting the adhesive agent layers 22a and 22b include an acrylic-based adhesive agent, an epoxy-based adhesive agent, a silicone-based adhesive agent, a polyolefin-based adhesive agent, a urethane-based adhesive agent, a polyvinyl ether-based adhesive agent, and synthetic adhesive agents thereof. Among these, a urethane synthetic adhesive agent can be suitably used as an adhesive agent, from the viewpoint of achieving both adhesiveness and low cost. The thickness of the adhesive agent layers 22a and 22b is, for example, 1 to 100 μm. The thickness may be 1 to 30 μm or 30 to 100 μm depending on a material constituting the adhesive agent layers 22a and 22b.

(Aluminum foil)

The thickness of the aluminum foil 23 is preferably 15 μm or less, more preferably 13 μm or less, and further preferably 8 μm or less. When the thickness of the aluminum foil 23 is 15 μm or less, the main surface 100f of the fire extinguishing material 100A is likely to tear, and the fire extinguishing agent is likely to be ejected toward a flame from the torn surface, when the fire extinguishing material 100A exerts its fire extinguishing performance. Fire extinguishing in the early stages can be achieved with high probability, compared with a fire extinguishing material in which the aluminum foil is extremely thick so that the main surface 100f is unlikely to tear, and the peripheral edge portion is likely to tear earlier. On the other hand, the thickness of the aluminum foil 23 is preferably 3 μm or more, and further preferably 5 μm or more. When the thickness of the aluminum foil 23 is 3 μm or more, there is a tendency to be able to achieve excellent gas barrier performance while being capable of further suppressing performance deterioration of the fire extinguishing agent.

The puncture strength of the aluminum foil 23 is preferably 10 N or less, and more preferably 5 N or less. When the puncture strength of the aluminum foil 23 is 10 N or less, the main surface 100f of the fire extinguishing material 100A is likely to tear, and the fire extinguishing agent is likely to be ejected toward a flame from the torn surface, when the fire extinguishing material 100A exerts its fire extinguishing performance. On the other hand, the puncture strength of the aluminum foil 23 is preferably 0.5 N or more, and more preferably 1 N or more. When the puncture strength of the aluminum foil 23 is 0.5 N or more, there is a tendency to be able to suppress the occurrence of pinholes while being capable of further suppressing performance deterioration of the fire extinguishing agent.

The tensile fracture strength of the aluminum foil 23 is preferably 25 N or less, and more preferably 20 N or less. When the tensile fracture strength of the aluminum foil 23 is 25 N or less, the main surface 100f of the fire extinguishing material 100A is likely to tear, and the fire extinguishing agent is likely to be ejected toward a flame from the torn surface, when the fire extinguishing material 100A exerts its fire extinguishing performance. On the other hand, the tensile fracture strength of the aluminum foil 23 is preferably 8 N or more, and more preferably 12 N or more. When the tensile fracture strength of the aluminum foil 23 is 8 N or more, there is a tendency to be able to suppress the occurrence of pinholes while being capable of further suppressing performance deterioration of the fire extinguishing agent.

When the sheet 10 is covered with the aluminum foil 23 having excellent thermal conductivity, the entirety of the fire extinguishing material 100A is heated in a relatively short amount of time, and the packaging material 20 is likely to tear due to the thermal expansion of the fire extinguishing agent layer 12 and express fire extinguishing performance, even when there is a certain distance from the source of a fire to the fire extinguishing material 100A. Further, when the sheet 10 is covered with the aluminum foil 23 having excellent gas barrier performance, moisture can be prevented from entering the fire extinguishing material 100A and thereby deteriorating the performance of the fire extinguishing agent.

(Insulating layer)

As shown in Fig. 2, the insulating layer 24 constitutes the outermost layer of the fire extinguishing material 100A. The insulating layer 24 may be formed with resin. Examples of the resin include a polypropylene resin (PP), a polyester resin (polyethylene terephthalate (PET), etc.), a nylon resin, a fluorine resin (ethylene tetrafluoroethylene (ETFE), etc.),

and a polyvinyl chloride resin (PVC). The material of the insulating layer 24 is preferably a polypropylene resin, a polyester resin, a nylon resin, or a polyvinyl chloride resin. When the material of the insulating layer 24 is any of these, there is a tendency for the fire extinguishing material 100A to have even more excellent fire extinguishing performance.

The content of the resin in the insulating layer 24 with respect to the total amount of the insulating layer 24 may be 80 mass% or more, preferably 90 mass% or more, more preferably 95 mass% or more, and may be 100 mass%.

From the view point of abrasion resistance and mechanical strength retention, the thickness of the insulating layer 24 is preferably 4 μm or more. The thickness of the insulating layer 24 is preferably 50 μm or less, because bendability is excellent, and the fire extinguishing material can be installed in a small space.

The melting temperature of the insulating layer 24 is 150°C or higher, and preferably 220°C or higher. When the melting temperature is within the above-described range, there is a tendency to be capable of further suppressing a short circuit from occurring in the fire extinguishing target. The melting temperature of the insulating layer 24 is 500°C or lower, and preferably 400°C or lower. When the melting temperature is within the above-described range, there is a tendency for the fire extinguishing material 100A to have even more excellent fire extinguishing performance. The melting temperature is measured through analysis of an endothermic peak by differential scanning calorimetry.

The volume resistivity of the insulating layer 24 is preferably $10^{15}$ Ω·cm or more, and more preferably $10^{19}$ Ω·cm or more. When the volume resistivity is within such a numerical value range, there is a tendency to be capable of further suppressing a short circuit from occurring between the fire extinguishing material and the fire extinguishing target. The volume resistivity is measured in accordance with JIS C 2139-3.

The thermal conductivity of the insulating layer 24 is preferably 0.1 W/(m·K) or more, and more preferably 0.3 W/(m·K) or more. When the thermal conductivity is within such a range, heat is easily transferred to the fire extinguishing agent layer. Therefore, there is a tendency for the fire extinguishing material 100A to have even more excellent fire extinguishing performance. The thermal conductivity is measured in accordance with ASTM C177.

<Method for producing fire extinguishing material>

A method for producing the fire extinguishing material 100A will be described. The fire extinguishing material 100A can be produced by, for example, a roll-to-roll technique in the following manner. That is, a roll (not shown) obtained by winding the substrate 11 in a roll shape is prepared. A coating liquid is applied to a prescribed region on the surface of the substrate 11 unwound from this roll and dried to form the fire extinguishing agent layer 12. The application can be performed by a wet coating method. Examples of the wet coating method include a gravure coating method, a comma coating method, a spray coating method, a dip coating method, a curtain coat method, a spin coat method, a sponge roll method, a die coat method, and coating by a brush. Through this process, the sheet 10 including the substrate 11 and the fire extinguishing agent layer 12 is obtained.

On the other hand, two rolls (not shown) each obtained by winding the packaging material 20 in a roll shape are prepared. The sheet 10 is disposed between the packaging materials 20 unwound from the two rolls. The packaging materials 20 are hot-pressed and subjected to die cutting to obtain the fire extinguishing material 100A.

<Device having fire extinguishing function>

A device having a fire extinguishing function includes a fire extinguishing target having a risk of fire, and a fire extinguishing material. Examples of the fire extinguishing target include an electrical device, a switchboard, a distribution board, and a battery (for example, a lithium ion battery). The fire extinguishing material may be arranged to face the fire extinguishing target in the device according to the present embodiment. The distance between the fire extinguishing material and the fire extinguishing target may be, for example, 0 mm or more or 1 mm or more, and may be 5 mm or less or 10 mm or less.

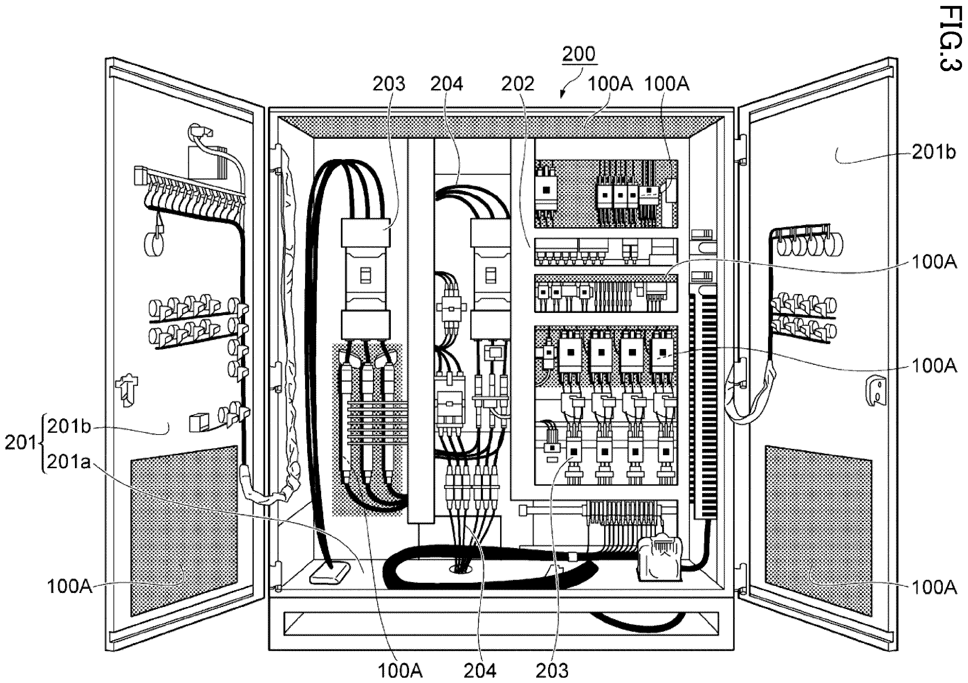

Fig. 3 is a perspective view schematically showing an embodiment of the device having a fire extinguishing function. Fig. 3 is a view showing a switchboard as an example of an electrical equipment. An electrical equipment 200 mainly includes a cabinet 201 provided with a housing section 201a housing an electrical device and an open/close door 201b as well as a breaker 203 and wiring 204 as an electrical device. A part of the wiring 204 is collectively housed in a wiring cover 202. The electrical equipment 200 includes the fire extinguishing material 100A in the following regions.

　　· A region facing the electrical device on the open/close door 201b.
　　· A region facing the electrical device on the top surface of the housing section 201a.
　　· A lower-surface-side region facing the electrical device on the wiring cover 202.
　　· A region facing the electrical device on the back surface of the housing section 201a, i.e., a region on the back side of the electrical device.

Note that the position in which the fire extinguishing material 100A is arranged is not limited to the aspect shown in Fig. 3, and can be appropriately adjusted depending on the position of an electrical device or the like which is a site having a risk of fire.

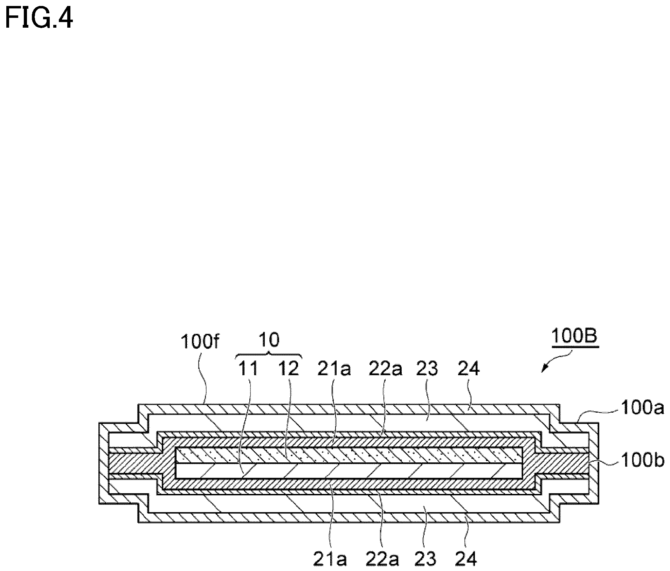

While the embodiment of the present disclosure has been described in detail, the present invention is not limited to the above-described embodiment. For example, the end of the aluminum foil 23 is exposed on the edge surface of the fire extinguishing material 100A in the above-described embodiment, but the end of the aluminum foil 23 may be covered with the insulating layer 24. In a fire extinguishing material 100B shown in Fig. 4, the edge surfaces of the sealant layer 21a, the adhesive agent layer 22a, and the aluminum foil 23 are covered with the insulating layer 24, and the entirety of the fire extinguishing material 100B is covered with the insulating layer 24. That is, the fire extinguishing material 100B has a configuration in which the internal structure thereof is sealed with the insulating layer 24.

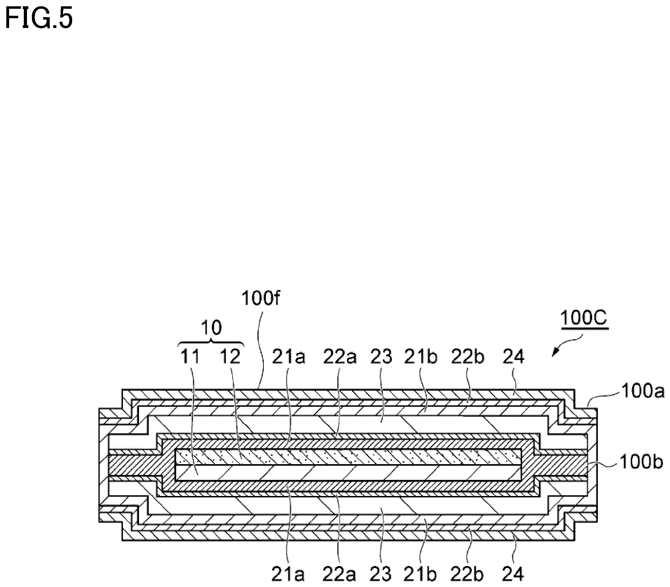

The fire extinguishing material according to the present disclosure may further include a sealant layer between the aluminum foil 23 and the insulating layer 24. In a fire extinguishing material 100C shown in Fig. 5, a sealant layer 21b is disposed on the outer side of the aluminum foil 23, and the adhesive agent layer 22b and the insulating layer 24 are disposed in this order on the outer side of the sealant layer 21b.

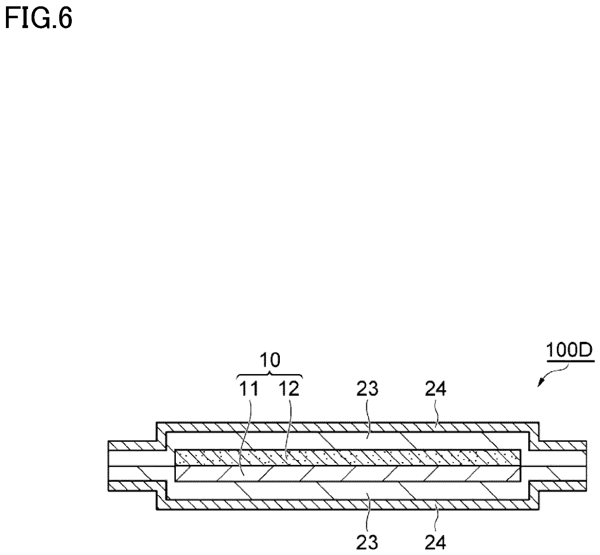

The fire extinguishing material according to the present disclosure may not include the sealant layer 21a and the adhesive agent layers 22a and 22b. In a fire extinguishing material 100D shown in Fig. 6, the aluminum foil 23 directly covers the sheet 10, and the insulating layer 24 is disposed to be in direct contact with the outer surface of the aluminum foil 23. In this case, the insulating layer 24 can be formed through a process of coating the aluminum foil 23 with a composition containing a resin having an insulation property to form a coat and drying the coat. Further, the end of the aluminum foil 23 can be welded to seal the sheet 10 inside the aluminum foil 23.

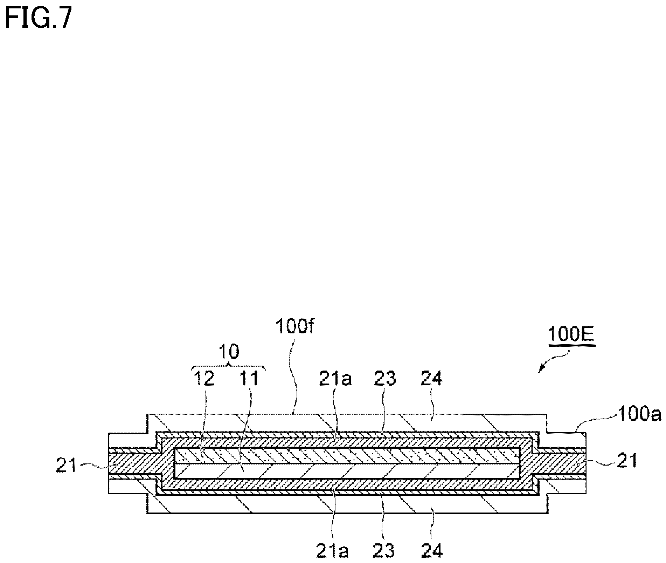

The fire extinguishing material according to the present disclosure may not include the adhesive agent layers 22a and 22b. A fire extinguishing material 100E shown in Fig. 7 includes the sheet 10 and a packaging material housing the sheet 10, and the packaging material is constituted by the insulating layer 24 constituting the outermost layer, the aluminum foil 23, and the sealant layer 21a. As shown in Fig. 7, the peripheral edge portion 100a of the fire extinguishing material 100E is constituted by the sealing portion 21 formed with the sealant layers 21a of the pair of packaging materials 20.

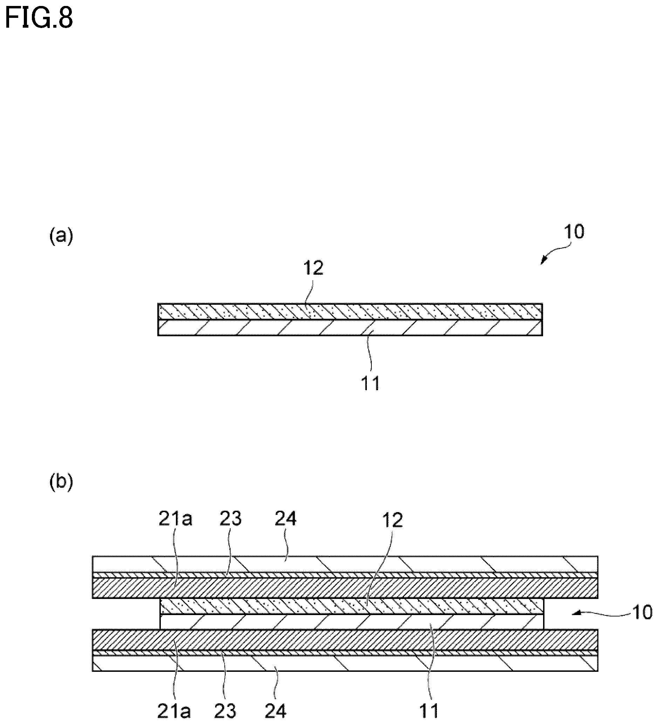

The fire extinguishing material 100E shown in Fig. 7 can be produced by a roll-to-roll technique in the same manner as above. That is, a roll (not shown) obtained by winding the substrate 11 in a roll shape is prepared. A coating liquid for forming a fire extinguishing agent is applied to a prescribed region on the surface of the substrate 11 unwound from this roll and dried to form the fire extinguishing agent layer 12 (see Fig. 8(a)). Through this process, the sheet 10 including the substrate 11 and the fire extinguishing agent layer 12 is obtained. On the other hand, two rolls (not shown) each obtained by winding the packaging material 20 in a roll shape are prepared. The sheet 10 is disposed between the packaging materials 20 unwound from the two rolls (see Fig. 8(b)). The laminate shown in Fig. 8(b) is pressed while heated and subjected to die cutting to obtain the fire extinguishing material 100E.

Examples

Although the present disclosure will be described in more detail with reference to the following examples, the present invention is not limited to these examples.

<Preparation of sheet>

(Examples 1 to 5 and Comparative Examples 1 to 9)

Potassium citrate and potassium chlorate were mixed and ground in an agate mortar to obtain a mixture. The mixture was sieved through a No. 800 mesh to adjust the particle diameter D50 to 8 to 12 $\mu$m. Accordingly, a fire extinguishing agent was obtained.

The following components were mixed to prepare a coating liquid for forming a fire extinguishing agent layer.

· Fire extinguishing agent: the above-obtained mixture of potassium citrate and potassium chlorate (87.4 parts by mass)
· Binder resin: ether-based urethane resin (12.6 parts by mass)
· Liquid medium: ethanol (87 parts by mass) and isopropyl alcohol (27 parts by mass)

As the substrate, a polyethylene terephthalate (PET) film (product name: E7002, manufactured by Toyobo Co., Ltd., thickness: 50 $\mu$m) was prepared. Using an applicator (gap: 450 $\mu$m), one main surface of the PET film was coated with the coating liquid. The coat on the PET film was dried in an oven (condition: 75°C, 7 minutes). Accordingly, a sheet in which the fire extinguishing agent layer (thickness: 190 to 210 $\mu$m) was formed on the substrate (PET film) was formed.

<Preparation of packaging material>

(Examples 1 to 5 and Comparative Examples 1 to 4, 7, and 9)

Urethane-based adhesive agents A-1143 and A-3 manufactured by Mitsui Chemicals, Inc. were prepared as an adhesive agent for forming an adhesive agent layer, and ethyl acetate was prepared as a diluting solvent. These were mixed at the ratio A-1143:A-3:ethyl acetate = 9:1:20.7 and stirred for 1 minute. Accordingly, an adhesive agent (solid content: 20 mass%) was obtained.

As the insulating layer, a material (resin film) shown in Table 1 was prepared. One surface of the insulating layer was coated with the adhesive agent using a wire bar #14 by a bar coating method to form a coat. The coat was dried in an oven under the condition of 80°C for 30 seconds. Accordingly, a first adhesive agent layer (dry coating weight: 3 g/m$^2$) was obtained. An aluminum foil (manufactured by Toyo Aluminium K.K., 1N30 aluminum foil, thickness: 7 $\mu$m) was bonded on a surface opposite the insulating layer of the first adhesive agent layer. The bonding was performed using a desktop laminator FA-570 manufactured by Taisei Laminator Co., LTD. under conditions of a lamination temperature of 50°C and a pressure of 0.1 MPa.

In the same manner as in the first adhesive agent layer, a second adhesive agent layer was formed on a surface opposite the first adhesive agent layer of the aluminum foil. A sealant layer (liner low-density polyethylene resin, thickness: 30 $\mu$m) was bonded on a surface opposite the aluminum foil of the second adhesive agent layer. The bonding was performed using a desktop laminator FA-570 manufactured by Taisei Laminator Co., LTD. under conditions of a lamination temperature of 50°C and a pressure of 0.1 MPa. Accordingly, a packaging material including the insulating layer, the first adhesive agent layer, the aluminum foil, the second adhesive agent layer, and the sealant layer in this order was obtained.

(Comparative Example 5)

A packaging material was obtained in the same manner as in Example 1, except that incombustible paper shown in Table 1 was used in place of the resin film.

(Comparative Example 6)

A packaging material was obtained in the same manner as in Example 1, except that glass cloth shown in Table 1 was used in place of the resin film.

(Comparative Example 8)

A packaging material was obtained in the same manner as in Example 1, except that a graphite sheet shown in Table 1 was used in place of the resin film.

[Table 1]

|  | Material | Manufacturer | Thickness [$\mu$m] | Brand |
|---|---|---|---|---|
| Example 1 | PET | Toray | 12 | Lumirror S10 |
| Example 2 | ONy | Toyobo | 15 | Harden N1202 |
| Example 3 | PVC | Okamoto | 80 | - |
| Example 4 | ETFE | Yodogawa Hu-Tech | 50 | Yodoflon |
| Example 5 | OPP | Mitsui Chemicals Tohcello | 20 | U-1 |
| Comparative Example 1 | CPP | Mitsui Chemicals Tohcello | 25 | SC |
| Comparative Example 2 | HDPE | Tamapoly | 40 | HD |
| Comparative Example 3 | LDPE | Tamapoly | 40 | V-1 |
| Comparative Example 4 | LLDPE | Mitsui Chemicals Tohcello | 30 | MC-S |
| Comparative Example 5 | Incombustible paper | Tigerex | 250 | GP18 |
| Comparative Example 6 | Glass cloth | Nittobo | 30 | WEA 03C 103 |
| Comparative Example 7 | Polyimide | Du Pont-Toray | 25 | Kapton H |
| Comparative Example 8 | Graphite | Panasonic | 70 | PGS |

(continued)

|  | Material | Manufacturer | Thickness [μm] | Brand |
|---|---|---|---|---|
| Comparative Example 9 | PET | Toray | 12 | Lumirror S10 |

<Production of fire extinguishing material>

(Examples 1 to 5 and Comparative Examples 1 to 9)

The above-obtained sheet was sandwiched between the pair of packaging materials, and four edges of the packaging materials were heat-sealed to enclose the sheet. The heat-sealing conditions were 140°C and 2 seconds. Accordingly, an evaluation sample of the fire extinguishing material was obtained.

<Evaluation of fire extinguishing property test>

A steel container of 20 cm in length, 30 cm in width, and 40 cm in height was prepared. For preventing fire from the solid fuel from being extinguished due to suffocation, five circular vent holes having a diameter of 8.5 mm were disposed at positions 5, 12.5, 20.0, 27.5, and 35.0 cm from the top surface in height on each side surface of the container. A 50 mm × 50 mm evaluation sample was bonded to the center of the container top surface with double- sided tape. On the center of the container bottom surface, 1.5 g of solid fuel (solid fuel Fire Block Fire Starter manufactured by Captain Stag Co., Ltd.) having a length of 15 mm, a width of 15 mm, and a height of 10 mm was placed. The distance between the solid fuel and the evaluation sample was 20 cm. It was confirmed whether the evaluation sample can extinguish fire within 180 seconds after the solid fuel caught fire. Whether fire was extinguished was confirmed for five samples of each of Examples and Comparative Examples. The ratio of samples in which fire could be extinguished among five samples is shown in Table 2.

<Evaluation of insulation property>

The evaluation sample was cut to a size of 50 mm × 50 mm. A voltage of 3.5 kV was applied on both surfaces of the evaluation sample (temperature: 25°C) for 60 seconds. The result was evaluated based on the following criteria. The application of a voltage was performed using an AC/DC withstand voltage and insulation resistance tester (manufactured by Kikusui Electronics Corp.). Further, a voltage was similarly applied to the evaluation sample heated to 150°C. The result was evaluated based on the following criteria. The result is shown in Table 2.

(Criteria)

A: Not energized.
B: Energized.

<Property stability of fire extinguishing material>

The total light transmittance of the obtained evaluation sample was measured by a method according to JIS K 7361-1 using a haze meter (BYK-Gardner Haze-Guard Plus manufactured by BYK Co.). The measurement was performed before placing the evaluation sample in a constant temperature and humidity chamber (under conditions of 85°C/85% RH) (initial total light transmittance) and after 24 hours passed thereafter (total light transmittance after storage). These total light transmittances were substituted into the following expression (1) to calculate a change Δ in total light transmittance between before and after storage. When moisture absorption (deliquescence) occurred in the fire extinguishing agent, the transparency of the fire extinguishing agent layer increases. Therefore, the degree of deliquescence can be confirmed by confirming the change Δ. The change Δ was evaluated based on the following criteria. The result is shown in Table 2.

Change Δ = value of total light transmittance after storage - value of initial total light transmittance          (1)

(Criteria)

A: The change Δ is 35 or less.
B: The change Δ exceeds 35.

<Measurement of volume resistivity of insulating layer>

A film including only the insulating layer was prepared, and the volume resistivity of the insulating layer was measured in accordance with JIS C 2139-3-1 The result is shown in Table 2.

<Measurement of thermal conductivity of insulating layer>

A film including only the insulating layer was prepared, and the thermal conductivity of the insulating layer was measured in accordance with ASTM C177. The result is shown in Table 2.

<Measurement of melting temperature of insulating layer>

A film including only the insulating layer was prepared, and differential scanning calorimetry was performed using a DSC7000X differential scanning calorimeter (Hitachi High-Tech Science Corporation). Based on the result, the melting temperature was determined from the endothermic peak. The result is shown in Table 2.

[Table 2]

| | Thickness of aluminum foil [$\mu$m] | Thickness of gas barrier film [$\mu$m] | Insulating layer | | | | Evaluation result | | | |
|---|---|---|---|---|---|---|---|---|---|---|
| | | | Material | Volume resistivity [$\Omega \cdot$ cm] | Melting temperature [°C] | Thermal conductivity [W/(m·K)] | Insulation property (25°C) | Insulation property (150°C) | Property stability | Fire extinguishing rate [%] |
| Example 1 | 7 | - | PET | $1.00 \times 10^{19}$ | 264 | 0.14 | A | A | A | 80 |
| Example 2 | 12 | - | PET | $1.00 \times 10^{19}$ | 264 | 0.14 | A | A | A | 40 |
| Example 3 | 7 | - | ONy | $1.00 \times 10^{15}$ | 215 | 0.3 | A | A | A | 80 |
| Example 4 | 7 | - | PVC | $1.00 \times 10^{15}$ | 170 | 0.13 | A | A | A | 80 |
| Example 5 | 7 | - | ETFE | $1.00 \times 10^{18}$ | 260 | 0.25 | A | A | A | 20 |
| Example 6 | 7 | - | OPP | $1.00 \times 10^{16}$ | 165 | 0.12 | A | A | A | 80 |
| Comparative Example 1 | 7 | - | CPP | $1.00 \times 10^{16}$ | 138 | 0.12 | A | B | A | 80 |
| Comparative Example 2 | 7 | - | HDPE | $1.00 \times 10^{16}$ | 137 | 0.46 | A | B | A | 80 |
| Comparative Example 3 | 7 | - | LDPE | $1.00 \times 10^{16}$ | 115 | 0.33 | A | B | A | 80 |
| Comparative Example 4 | 7 | - | LLDPE | $1.00 \times 10^{16}$ | 125 | 0.35 | A | B | A | 80 |
| Comparative Example 5 | 7 | - | Incombustible paper | $1.00 \times 10^{19}$ | None | 0.11 | A | A | A | 0 |
| Comparative Example 6 | 7 | - | Glass cloth | $1.00 \times 10^{16}$ | None | 0.05 | A | A | A | 0 |
| Comparative Example 7 | 7 | - | Polyimide | $1.00 \times 10^{17}$ | None | 0.3 | A | A | A | 0 |
| Comparative Example 8 | 7 | - | Graphite | $1.00 \times 10^{-3}$ | 400 | 5 | B | B | A | 20 |
| Comparative Example 9 | - | 12 | PET | $1.00 \times 10^{19}$ | 264 | 0.14 | A | A | B | 80 |

<Preparation of sheet>

(Example 6)

The following components were mixed to prepare a coating liquid for forming a fire extinguishing agent layer.

· Fire extinguishing agent: mixture of potassium chlorate and tripotassium citrate, 87 parts by mass
· Binder resin: ether-based polyurethane resin solution (solution of 100 parts by mass of an ether-based polyurethane resin dissolved in 210 parts by mass of isopropyl alcohol), 41 parts by mass
· Liquid medium: ethanol, 87 parts by mass

Note that the mixture of potassium chlorate and tripotassium citrate as a deliquescent salt was obtained by grinding the mixture in an agate mortar and then filtering the ground product through a No. 800 mesh to adjust the particle diameter D50 to 12 μm.

The coating liquid was applied on one surface of a 50 μm-thick polyethylene terephthalate (PET) substrate (product name: E7002, manufactured by Toyobo Co., Ltd.) using an applicator such that the fire extinguishing agent layer after drying had a thickness of 150 μm. Thereafter, the coat was dried in an oven at 75°C for 7 minutes. Accordingly, a sheet in which the fire extinguishing agent layer was formed on the surface of the substrate was obtained.

<Preparation of packaging material>

A laminate film (product name: ALPET, manufactured by Asia Aluminum Co., Ltd.) of an aluminum foil (thickness: 7 μm) and a PET film (thickness: 38 μm) was prepared. A sealant layer (LLDPE resin, thickness: 30 μm) was laminated to this laminate film to obtain a packaging material having a laminate structure of PET film/ aluminum foil (Al foil)/sealant layer.

<Production of fire extinguishing material>

The above-described sheet (50 mm × 50 mm) was sandwiched between two of the above-described packaging materials, and four edges of the packaging materials were heat-sealed to obtain a fire extinguishing material. The heat-sealing conditions were 140°C and 2 seconds. The heat seal width of each edge was 10 mm. As a result, a fire extinguishing material having an external size of 70 mm × 70 mm was obtained.

(Example 7)

A fire extinguishing material was obtained in the same manner as in Example 6, except that a laminate film (product name: ALPET, manufactured by Asia Aluminum Co., Ltd.) of an aluminum foil (thickness: 9 μm) and a PET film (thickness: 12 μm) was used in place of the laminate film of an aluminum foil (thickness: 7 μm) and a PET film (thickness: 38 μm).

(Example 8)

A fire extinguishing material was obtained in the same manner as in Example 6, except that a laminate film (product name: ALPET, manufactured by Asia Aluminum Co., Ltd.) of an aluminum foil (thickness: 12 μm) and a PET film (thickness: 12 μm) was used in place of the laminate film of an aluminum foil (thickness: 7 μm) and a PET film (thickness: 38 μm).

(Comparative Example 10)

A fire extinguishing material was obtained in the same manner as in Example 6, except that a PET film (hereinafter, referred to as a "silica deposited PET film") having a silica deposited layer (thickness: about 20 nm) was used in place of the laminate film of an aluminum foil (thickness: 7 μm) and a PET film (thickness: 38 μm). The silica deposited PET film had a thickness of 12 μm and a water vapor transmittance of 0.2 to 0.6 g/(m$^2$·day). The water vapor permeability in the present disclosure means a value measured under conditions of 40°C/90% RH in accordance with JIS K 7129.

(Comparative Example 11)

A fire extinguishing material was obtained in the same manner as in Example 6, except that a PET film (hereinafter, referred to as an "aluminum deposited PET film") having an aluminum deposited layer (Al deposited layer, thickness: about 30 nm) was used in place of the laminate film of an aluminum foil (thickness: 7 $\mu$m) and a PET film (thickness: 38 $\mu$m). The aluminum deposited PET film had a thickness of 12 $\mu$m and a water vapor transmittance of 0.5 to 0.7 g/(m$^2$·day).

<Evaluation items>

(Puncture strength)

The aluminum foil (100 mm in length × 30 mm in width) used in each of Examples 6 to 8 was fixed to the position at a height of 90 mm. Using a push-pull gauge (manufactured by Aikoh Engineering Co., Ltd.), the aluminum foil was pierced with a jig having a diameter of 15 mm, and the strength when the jig passed through the aluminum foil was measured.

(Tensile fracture strength)

The aluminum foil (125 mm in length × 25 mm in width) used in each of Examples 6 to 8 was set in a universal tensile tester (Autograph AGS-X manufactured by Shimadzu Corporation). A tensile test was performed under conditions of a chuck interval of 100 mm and a tensile speed of 200 mm/min to measure the strength when the aluminum foil tore.

(Deliquescence resistance test)

The total light transmittance of the fire extinguishing material according to each of Examples 6 to 8 and Comparatives Examples 10 and 11 was measured by a method according to JIS K 7361-1 using a haze meter (BYK-Gardner Haze-Guard Plus manufactured by BYK Co.). The measurement was performed before placing the fire extinguishing material in a constant temperature and humidity chamber (under conditions of 85°C/85% RH) (initial total light transmittance) and after 72 hours passed thereafter (total light transmittance after storage), and the change Δ in total light transmittance between before and after storage was calculated according to the following expression. Since the transparency of the fire extinguishing material increases when moisture absorption (deliquescence) occurs, the degree of deliquescence was evaluated by confirming this change Δ. Note that the total light transmittance of the sheet obtained by removing the packaging material from the fire extinguishing material was measured. The evaluation was performed based on the following criteria.

Change Δ = value of total light transmittance after storage - value of initial total light transmittance

　　A: The change Δ is 35 or less.
　　B: The change Δ exceeds 35.

(Fire extinguishing property test)

A steel container of 20 cm in length, 30 cm in width, and 40 cm in height was prepared. To each side surface of the container, a circular vent hole having a diameter of 8.5 mm was disposed at a position 5 cm away from the top surface in the height direction. Similarly, a circular vent hole having a diameter of 8.5 mm was disposed at each of a position 12.5 cm away from the top surface in the height direction, a position 20.0 cm away from the top surface in the height direction, a position 27.5 cm away from the top surface in the height direction, and a position 35.0 cm away from the top surface in the height direction, on each side surface of the container. To the center of the top surface of the container, the fire extinguishing material according to each of Examples and Comparative Examples was bonded with double-sided tape. In the container, 1.5 g of solid fuel (solid fuel Fire Block Fire Starter manufactured by Captain Stag Co., Ltd.) having a length of 15 mm, a width of 15 mm, and a height of 10 mm was placed, such that the distance from the fire extinguishing material in the height direction was 20 cm. At this time, the solid fuel was placed to overlap the fire extinguishing material in the height direction. It was evaluated whether the fire extinguishing material can extinguish fire within 180 seconds after the solid fuel caught fire. In Table 3, "n" indicates the number of tests, and "Fire extinguishing rate" indicates the rate of tests in which fire could be extinguished within 180 seconds after fire was caught. Note that in all cases in which fire could not be extinguished within 180 seconds after fire was caught, the fire extinguishing agent was not ejected from the fire extinguishing material.

[Table 3]

| | | Gas barrier layer | | | Deliquescence resistance test | Fire extinguishing property test | |
| --- | --- | --- | --- | --- | --- | --- | --- |
| | | Material | Thickness | Puncture strength | Tensile fracture strength | | n | Fire extinguishing rate |
| Example 6 | Al foil | 7 $\mu$m | 2N | 13 N | A | 4 | 50% |
| Example 7 | Al foil | 9 $\mu$m | 2N | 13 N | A | 6 | 33% |
| Example 8 | Al foil | 12 $\mu$m | 3 N | 18 N | A | 6 | 33% |
| Comparative Example 10 | Silica deposited layer | About 20 nm | | | B | 3 | 33% |
| Comparative Example 11 | Al deposited layer | About 30 nm | - | - | B | 3 | 33% |

[Reference Signs List]

| 10 | Sheet |
| --- | --- |
| 11 | Substrate |
| 12 | Fire extinguishing agent layer |
| 20 | Packaging material |
| 21 | Sealing portion |
| 21a | Sealant layer |
| 23 | Aluminum foil |
| 24 | Insulating layer |
| 100A, 100B, 100C, 100D, 100E | Fire extinguishing material |
| 200 | Electrical equipment |
| 203 | Breaker |
| 204 | Wiring |

**Claims**

1. A fire extinguishing material comprising:

a sheet containing a fire extinguishing agent layer; and
a packaging material housing the sheet, wherein
the fire extinguishing agent layer includes a binder resin and a fire extinguishing agent that contains at least one of a deliquescent organic salt and a deliquescent inorganic salt,
the packaging material has a laminate structure containing an aluminum foil and an insulating layer,
the aluminum foil is disposed between the sheet and the insulating layer, and
the insulating layer has a melting temperature of 150°C to 500°C.

2. The fire extinguishing material according to claim 1, wherein the insulating layer has a volume resistivity of $10^{15}$ $\Omega \cdot$cm or more.

3. The fire extinguishing material according to claim 1 or 2, wherein the insulating layer has a thermal conductivity of 0.1 W/(m·K) or more.

4. The fire extinguishing material according to any one of claims 1 to 3, wherein the insulating layer contains at least one resin of a polyethylene terephthalate resin, a nylon resin, a polyvinyl chloride resin, and a polypropylene resin.

5. The fire extinguishing material according to any one of claims 1 to 4, wherein the sheet further includes a substrate.

6. The fire extinguishing material according to any one of claims 1 to 5, wherein the aluminum foil has a thickness of 15 $\mu$m or less.

7. The fire extinguishing material according to any one of claims 1 to 6, wherein the aluminum foil has a thickness of 3 $\mu$m or more.

8. The fire extinguishing material according to any one of claims 1 to 7, wherein the aluminum foil has a puncture strength of 10 N or less.

9. The fire extinguishing material according to any one of claims 1 to 8, wherein the aluminum foil has a tensile fracture strength of 25 N or less.

10. The fire extinguishing material according to any one of claims 1 to 9, further comprising a sealant layer between the sheet and the aluminum foil.

11. The fire extinguishing material according to claim 10, wherein a peripheral edge portion is constituted by a sealing portion formed with the sealant layer.

12. A device having a fire extinguishing function comprising:

at least one fire extinguishing target having a risk of fire selected from the group consisting of an electrical device, a switchboard, a distribution board, and a battery; and
the fire extinguishing material according to any one of claims 1 to 11.

## FIG.1

FIG.2

FIG.3

FIG.4

FIG.5

EP 4 751 782 A1

FIG.6

22

FIG.7

FIG.8

(a)

12

10

11

(b)

21a   23   24   12

10

21a   23   24   11

## INTERNATIONAL SEARCH REPORT

| International application No. |
|---|
| **PCT/JP2024/026360** |

**A. CLASSIFICATION OF SUBJECT MATTER**

*A62C 2/00*(2006.01)i; *A62C 3/16*(2006.01)i; *A62C 19/00*(2006.01)i; *A62D 1/06*(2006.01)i
FI: A62C2/00 Z; A62D1/06; A62C3/16 C; A62C2/00 X; A62C19/00

According to International Patent Classification (IPC) or to both national classification and IPC

**B. FIELDS SEARCHED**

Minimum documentation searched (classification system followed by classification symbols)

A62C2/00; A62C3/16; A62C19/00; A62D1/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/203685 A1 (MITSUI CHEMICALS INC.) 08 October 2020 (2020-10-08) paragraphs [0016]-[0136], fig. 3, 7 | 1-7, 10-12 |
| A | | 8-9 |
| Y | WO 2023/080020 A1 (TOPPAN PRINTING CO., LTD.) 11 May 2023 (2023-05-11) paragraphs [0022], [0028]-[0037] | 1-7, 10-12 |
| Y | KR 10-2021-0150869 A (AHN, Kwang-Ho) 13 December 2021 (2021-12-13) paragraph [0044], fig. 2-3 | 1-7, 10-12 |
| Y | 株式会社KDA, PP(ポリプロピレン)樹脂, (KDA CORPORATION), non-official translation (PP (polypropylene) resin) In particular, see thermal conductivity and volume resistivity. | 2-7, 10-12 |
| Y | 株式会社KDA, PET(ポリエチレンテレフタレート)樹脂, (KDA CORPORATION), non-official translation (PET (polyethylene terephthalate) resin) In particular, see thermal conductivity and volume resistivity. | 2-7, 10-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/026360** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | 株式会社KDA, PC(ポリカーボネート)樹脂, (KDA CORPORATION), non-official translation (PC (polycarbonate) resin)<br>In particular, see thermal conductivity and volume resistivity. | 2-7, 10-12 |

Form PCT/ISA/210 (second sheet) (July 2022)

**INTERNATIONAL SEARCH REPORT**
Information on patent family members

International application No.

**PCT/JP2024/026360**

| Patent document cited in search report | | | Publication date (day/month/year) | Patent family member(s) | | | Publication date (day/month/year) |
|---|---|---|---|---|---|---|---|
| WO | 2020/203685 | A1 | 08 October 2020 | US | 2022/0149463 | A1 | |
| | | | | paragraphs [0030]-[0378], fig. 3, 7 | | | |
| | | | | EP | 3951976 | A1 | |
| | | | | CN | 113424356 | A | |
| WO | 2023/080020 | A1 | 11 May 2023 | CN | 118119435 | A | |
| KR | 10-2021-0150869 | A | 13 December 2021 | US | 2021/0379430 | A1 | |
| | | | | paragraph [0053], fig. 2-3 | | | |

Form PCT/ISA/210 (patent family annex) (July 2022)

**REFERENCES CITED IN THE DESCRIPTION**

**Patent documents cited in the description**

- WO 2018047762 A
- JP 2021137345 A